# EUROPÄISCHE PATENTSCHRIFT

(11) **EP 0 958 453 B1**
(45) Veröffentlichungstag und Bekanntmachung des Hinweises auf die Patenterteilung: **01.10.2003**
(21) Anmeldenummer: 98945071.3
(22) Anmeldetag: 30.07.1998
(51) Int. Cl.: F04B 49/18, F04B 53/12

(54) **KOLBENPUMPE**
PISTON PUMP
POMPE A PISTON

(30) Priorität: 30.10.1997 DE 19747852
(43) Veröffentlichungstag der Anmeldung: 24.11.1999
(73) Patentinhaber: ROBERT BOSCH GMBH, 70442 Stuttgart (DE)
(72) Erfinder: ALAZE, Norbert, D-71706 Markgröningen (DE)
(86) Internationale Anmeldenummer: DE9802173
(87) Internationale Veröffentlichungsnummer: WO99023387

(56) Entgegenhaltungen:
- DE-A- 2 101 037
- DE-A- 4 107 979
- FR-A- 2 305 612
- FR-A- 2 585 413
- US-A- 3 112 705
- US-A- 3 775 027

## Beschreibung

### Stand der Technik

Die Erfindung betrifft eine Kolbenpumpe mit den Merkmalen des Oberbegriffs des Anspruchs 1, die insbesondere zur Verwendung als Pumpe für eine hydraulische Fahrzeugbremsanlage vorgesehen ist.

Eine derartige Kolbenpumpe ist bereits aus der US-A-3 112 705 bekannt. Diese Kolbenpumpe weist unter anderem einen Kolben auf, der in einem Pumpengehäuse axial verschieblich aufgenommen ist und mittels eines elektromotorisch rotierend antreibbaren Exzenters zu einer in axialer Richtung hin- und hergehenden Hubbewegung antreibbar ist. Darüber hinaus wirkt der Kolben dieser Kolbenpumpe mit einem Körper zusammen, der entgegen der Kraft eines Federelements gegenüber dem Kolben ebenfalls axial verschieblich ist. Im Unterschied zum Gegenstand der vorliegenden Erfindung mündet der Fluideinlaß dieser Kolbenpumpe unmittelbar in den Verdrängungsraum ein. Die bekannte Kolbenpumpe arbeitet somit einfachwirkend, das heißt sie saugt nur in einer beiden Hubrichtungen des Kolbens Druckmittel an.

Diese einfachwirkende Arbeitsweise führt zu relativ hohen Strömungsgeschwindigkeiten in der Zuführleitung zum Verdrängungsraum und hat deshalb einen großen Druckabfall in dieser Zuführleitung zur Folge. Dies kann Funktionsstörungen der Kolbenpumpe verursachen beziehungsweise erfordert verhältnismäßig große Querschnitte der Zuführleitung. Aufgabe der vorliegenden Erfindung ist es deshalb eine Kolbenpumpe vorzuschlagen, die frei von diesen Nachteilen ist. Diese Aufgabe wird von einer Kolbenpumpe mit den Merkmalen des Anspruchs 1 gelöst.

### Vorteile der Erfindung

Die erfindungsgemäße Kolbenpumpe hat demgegenüber den Vorteil, dass sie zumindest bei niedrigen Betriebsdrücken sowohl während des Einfahrhubs als auch während des Ausfahrhubs des Kolbens Druckmittel ansaugt, also doppeltwirkend arbeitet. Dies senkt die auftretende maximale Strömungsgeschwindigkeit sowie den Druckabfall in der Zuführleitung. Dadurch weist die vorgeschlagene Kolbenpumpe bei im wesentlichen unverändertem Bauaufwand eine verbesserte Funktionsfähigkeit auf und erlaubt relativ kleinere Querschnitte der Zuführleitung.

Die Unteransprüche haben vorteilhafte Ausgestaltungen und Weiterbildungen der im Hauptanspruch angegebenen Erfindung zum Gegenstand.

In bevorzugter Ausgestaltung der Erfindung ist der Körper als Ringkörper ausgebildet, der nach Art einer Gleithülse auf dem Kolben axial verschiebbar und der auch im Pumpengehäuse axial verschiebbar ist (Anspruch 3). Durch die Ausbildung des Körpers als Ringkörper läßt sich die Erfindung auf einfache Weise verwirklichen.

Insbesondere findet bei einer Ausgestaltung der Erfindung ein ohnehin notwendiger Dicht- und/oder Führungsring Verwendung als mit dem Kolben mitbewegbarer Ringkörper (Anspruch 4). Diese Ausgestaltung der Erfindung hat den Vorteil, daß sie keinen zusätzlichen Körper erfordert.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

### Zeichnung

Die Erfindung wird nachfolgend anhand eines in der Zeichnung dargestellten Ausführungsbeispiels näher erläutert. Es zeigen:
Figur 1 einen Achsschnitt einer erfindungsgemäßen Kolbenpumpe,
Figur 2 ein schematisiertes Pumpenkennlinien-Diagramm, und
Figur 3 die Darstellung einer Einzelheit einer abgewandelten Ausführungsform der erfindungsgemäßen Kolbenpumpe gemäß Pfeil III in Figur 1.

### Beschreibung der Ausführungsbeispiele

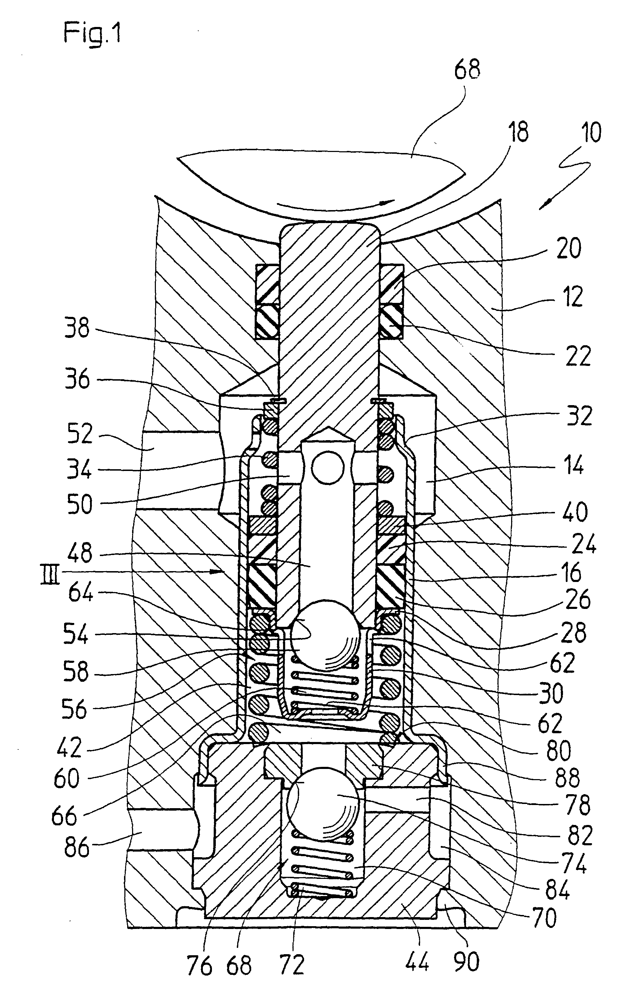

Die in Figur 1 dargestellte, erfindungsgemäße Kolbenpumpe 10 ist in einen Hydraulikblock 12 eingesetzt, von dem in der Zeichnung nur ein die Kolbenpumpe 10 umgebendes Bruchstück dargestellt ist. In den Hydraulikblock 12 sind weitere, nicht dargestellte hydraulische Bauelemente, wie beispielsweise Magnetventile, Hydrospeicher und Dämpfer einer schlupfgeregelten Fahrzeugbremsanlage eingesetzt und durch den Hydraulikblock 12 miteinander und mit der Kolbenpumpe 10 hydraulisch geschaltet. Der Hydraulikblock 12 bildet ein Pumpengehäuse der erfindungsgemäßen Kolbenpumpe 10 und wird nachfolgend als Pumpengehäuse 12 bezeichnet.

In eine gestufte, durchgehende Bohrung 14 im Pumpengehäuse 12 ist eine rohrförmige Laufbuchse 16 eingepreßt. In der Laufbuchse 16 ist ein stiftförmiger Kolben 18 axial verschieblich aufgenommen. Der Kolben 18 steht über einen Teil seiner Länge aus der Laufbuchse 16 vor. An seinem aus der Laufbuchse 16 vorstehenden Ende ist der Kolben 18 mit einem Führungsring 20 im Pumpengehäuse 12 axial verschieblich geführt und mittels eines Dichtrings 22 im Pumpengehäuse 12 abgedichtet. Der Führungsring 20 und der Dichtring 22 sind gemeinsam in eine Nut eingesetzt, die in der Bohrung 14 im Pumpengehäuse 12 angebracht ist.

Ein in der Laufbuchse 16 befindliches Ende des Kolbens 18 ist mittels eines Führungsrings 24 in der Laufbuchse 16 axial verschieblich geführt und mittels eines Dichtrings 26 in der Laufbuchse 16 abgedichtet, die auf den Kolben 18 aufgeschoben sind. Der Führungsring 24 und der Dichtring 26 sind sowohl in der Laufbuchse 16 als auch auf dem Kolben 18 in axialer Richtung verschiebbar. Begrenzt wird der Verschiebeweg in einer Richtung durch einen Radialflansch 28 eines Ventilkäfigs 30, der an dem in der Laufbuchse 16 befindlichen Stirnende des Kolbens 18 angebracht ist und dessen Radialflansch 28 radial nach außen von einem Umfang des Kolbens 18 absteht. Der Radialflansch 28 bildet einen Axialanschlag des Kolbens 18 für den Führungsring 24 und den Dichtring 26.

In entgegengesetzter Richtung wird der Verschiebeweg des Führungsrings 24 und des Dichtrings 26 in der Laufbuchse 16 von einer Ringstufe 32 begrenzt, die einen Durchmesser der Laufbuchse 16 an dem Stirnende verkleinert, aus dem der Kolben 18 über einen Teil seiner Länge vorsteht. Die Ringstufe 32 bildet einen Axialanschlag der Laufbuchse 16 für den Führungsring 25 und den Dichtring 26, die in der Laufbuchse 16 und auf dem Kolben 18 axial verschieblich sind.

Der Führungsring 24 und der Dichtring 26 werden von einer auf den Kolben 18 aufgeschobenen Schraubendruckfeder 34 gegen den den Axialanschlag des Kolbens 18 bildenden Radialflansch 28 des Ventilkäfigs 30 gedrückt. Die Schraubendruckfeder 34 stützt sich über einen Zwischenlegring 36 und einen Sprengring 38, der in eine Kolbennut eingesetzt ist, am Kolben 18 ab. Zwischen die Schraubendruckfeder 34 und den Führungsring 24 ist ein Stützring 40 eingelegt. Die Schraubendruckfeder 34 drückt den Führungsring 24 und den Dichtring 26 unter Vorspannung gegen den Radialflansch 28, am Kolben 18.

Der Führungsring 24 und der Dichtring 26 bilden einen Körper, der sowohl in der Laufbuchse 16 als auch auf dem Kolben 18 in axialer Richtung verschieblich ist, der Führungsring 24 und der Dichtring 26 werden daher nachfolgend als Körper 24, 26 bezeichnet. Der Körper 24, 26 vergrößert eine Querschnittsfläche des Kolbens 18. Auch der Stützring 40 kann als Bestandteil des Körpers betrachtet werden.

Die erfindungsgemäße Kolbenpumpe 10 weist einen Verdrängungsraum 42 innerhalb der Laufbuchse 16 auf, der vom Kolben 18 mit dem auf ihm axial verschieblichen Körper 24, 26 sowie von einem Verschlußstopfen 44 begrenzt wird, der in ein der Ringstufe 32 abgewandtes Stirnende der Laufbuchse 16 eingesetzt ist.

Der auf dem Kolben 18 axial verschiebliche Körper 24, 26 hat folgende Funktion: Herrscht im Verdrängungsraum 42 ein Druck, der eine Kraft auf den Körper 24, 26 ausübt, die geringer als die Vorspannkraft der Schraubendruckfeder 34 ist, hält die Schraubendruckfeder 34 den Körper 24, 26 in Anlage am Radialflansch 28, d. h. der Körper 24, 26 bewegt sich mit dem Kolben 18 mit. Dies bedeutet, die erfindungsgemäße Kolbenpumpe 10 verdrängt bei einem Förderhub ihres Kolbens 18, bei dem sich der Kolben 18 in die Laufbuchse 16 hineinbewegt, ein Fluidvolumen (Fördervolumen) aus dem Verdrängungsraum 42, das dem Produkt aus dem Weg des Kolbens 18 beim Förderhub (Kolbenhub) und einer Innenquerschnittsfläche der Laufbuchse 16 entspricht. Es wird also ein großer Volumenstrom gefördert.

Herrscht dagegen im Verdrängungsraum 42 ein Druck, der den Körper 24, 26 gegen die Kraft der Schraubendruckfeder 34 an der Ringstufe 32 der Laufbuchse 16 hält, verdrängt der Kolben 18 bei seinem Förderhub lediglich ein Volumen aus dem Verdrängungsraum 42, das dem Produkt aus Kolbenhub und Querschnittsfläche des Kolbens 18 entspricht, die um eine ringförmige Stirnfläche des zwischen dem Kolben 18 und der Laufbuchse 16 einliegenden Körpers 24, 26 kleiner als die Innenquerschnittsfläche der Laufbuchse 16 ist. Liegt der Druck im Verdrängungsraum 42 zwischen den beiden geschilderten Drücken, verschiebt sich der Körper 24, 26 in der Laufbuchse 16 um einen kürzeren Weg als der Kolbenhub des Kolbens 18, das Fördervolumen liegt dementsprechend zwischen den beiden geschilderten Fällen. Die erfindungsgemäße Kolbenpumpe 10 hat also bei einem niedrigen Förderdruck ein vergrößertes Fördervolumen.

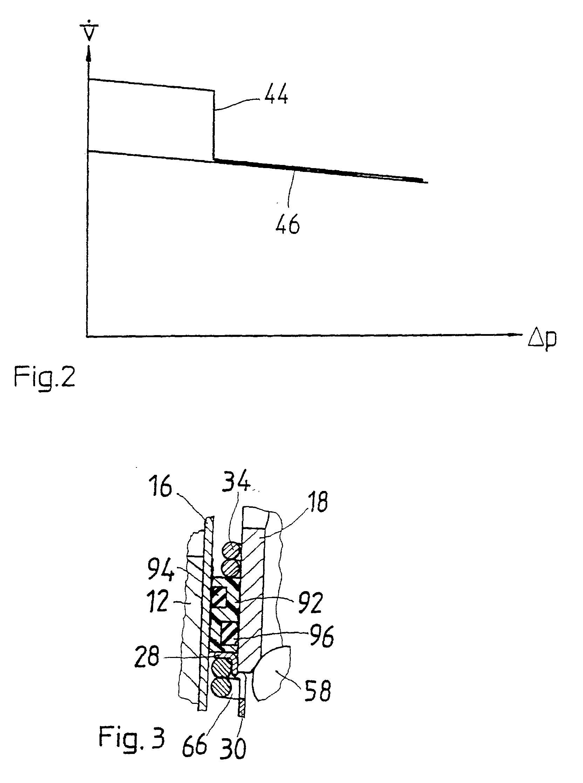

Eine Pumpenkennlinie der erfindungsgemäßen Kolbenpumpe 10 im Vergleich mit einer Pumpenkennlinie einer herkömmlichen Kolbenpumpe ist schematisch im Schaubild in Figur 2 dargestellt. Auf der Ordinate ist ein mittlerer Fördervolumenstrom, auf der Abszisse der Förderdruck, d. h. die Druckdifferenz zwischen Pumpenein- und -auslaß aufgetragen. Die obere Pumpenkennlinie 44 gehört zur erfindungsgemäßen Kolbenpumpe 10, die untere Pumpenkennlinie 46 gehört zu einer herkömmlichen Kolbenpumpe. Der vergrößerte Fördervolumenstrom der erfindungsgemäßen Kolbenpumpe 10 bei niedrigem Förderdruck ist deutlich erkennbar.

Die Vorspannkraft der Schraubendruckfeder 34 entspricht einem Druck von ca. 20 bis 30 bar im Verdrängungsraum 42 der Kolbenpumpe 10. In Figur 1 ist die Endstellung des Kolbens 18 am Ende des Förderhubs, d. h. bei am weitesten in die Laufbuchse 16 eingeschobenem Kolben 18 dargestellt.

Zum Fluideinlaß in die erfindungsgemäße Kolbenpumpe 10 weist der Kolben 18 eine axiale Sackbohrung 48 auf, die von Querbohrungen 50 gekreuzt wird. Der Fluideinlaß erfolgt durch eine Einlaßbohrung 52 im Pumpengehäuse 12, die radial in die gestufte Bohrung 14 mündet, und von dort weiter in das dem Verdrängungsraum 42 abgewandte Ende der Laufbuchse 15, in die Querbohrungen 50 und die Sackbohrung 48 des Kolbens 18. Die Sackbohrung 48 mündet mit einem konischen Ventilsitz 54 in den Verdrängungsraum 42. Der Ventilsitz 54 ist ebenso wie der Ventilkäfig 30 Teil eines als federbelastetes Rückschlagventil 56 ausgebildeten Einlaßventils 56 der Kolbenpumpe 10. Dieses Einlaßventil 56 weist eine Ventilkugel 58 als Ventilschließkörper auf, die von einer Schraubendruckfeder 60 als Ventilschließfeder gegen den Ventilsitz 54 gedrückt wird. Ventilschließfeder 60 und Ventilkugel 58 sind im Ventilkäfig 30 aufgenommen. Der Ventilkäfig 30 ist ein napfförmiges Blech-Tiefziehteil mit Durchströmöffnungen 62 an seinem Umfang und Boden. Der Ventilkäfig 30 weist eine Ringstufe 64 an seiner offenen Seite auf, mit der er an dem in der Laufbuchse 16 befindlichen Stirnende des Kolbens 18 anliegt. Er wird von einer als Schraubendruckfeder ausgebildeten Kolbenrückstellfeder 66 in Anlage am Kolben 18 gehalten, die in den Verdrängungsraum 42 eingesetzt ist, sich am Verschlußstopfen 44 abstützt und gegen den Radialflansch 28 des Ventilkäfigs 30 drückt. Die Kolbenrückstellfeder 66 drückt den Kolben 18 gegen einen Umfang eines elektromotorisch antreibbaren Exzenters 68, der zum Antrieb des Kolbens 18 zu seiner Hubbewegung in an sich bekannter Weise dient.

Als Auslaßventil 68 weist die erfindungsgemäße Kolbenpumpe 10 ebenfalls ein federbelastetes Rückschlagventil auf, das im Verschlußstopfen 44 untergebracht ist. Der Verschlußstopfen 44 weist eine axiale, zum Verdrängungsraum 42 hin offene Sackbohrung 70 auf, in die eine Schraubendruckfeder als Ventilschließfeder 72 eingesetzt ist, die eine in der Sackbohrung 70 aufgenommene Ventilkugel 74 als Ventilschließkörper gegen einen konischen Ventilsitz 76 des Auslaßventils 68 drückt. Der Ventilsitz 76 ist an einem kreisringförmigen Ventilsitzkörper 78 angebracht, der von einer dem Verdrängungsraum 42 zugewandten Stirnseite her in den Verschlußstopfen 44 eingesetzt und durch eine Verstemmung 80 gehalten ist.

Ein Fluidauslaß erfolgt durch eine Radialbohrung 82 im Verschlußstopfen 44 über einen den Verschlußstopfen 44 umgebenden Ringkanal 84 in eine radiale Auslaßbohrung 86 im Pumpengehäuse 12.

Der Verschlußstopfen 44 ist in eine ringstufenförmige Erweiterung 88 der Laufbuchse 16 fluiddicht eingepreßt. Der Verschlußstopfen 44 ist durch eine Verstemmung 90 des Pumpengehäuses 12 im Pumpengehäuse 12 gehalten und verschließt die gestufte Bohrung 14 im Pumpengehäuse 12 druckdicht.

Die dargestellte Kolbenpumpe 10 kann bei Bedarf auch so abgewandelt werden, daß sich die Schraubendruckfeder 34 nicht am Kolben 18, sondern, beispielsweise im Bereich des Führungs- und Dichtrings 20, 22, am Pumpengehäuse 12 abstützt. Bei dieser nicht dargestellten Abwandlung kann auf den Zwischenlegring 36 und den Sprengring 38 verzichtet werden. Von gewissem Nachteil bei dieser Abwandlung ist allenfalls, daß die Schraubendruckfeder 34 für einen größeren Hub ausgelegt sein muß, im Vergleich zur in der Zeichnung dargestellten Ausführung.

Die in Figur 3 lediglich als Einzelheit dargestellte Abwandlung der in Figur 1 dargestellten Kolbenpumpe weist einen Ringkörper 92 mit S-förmigem Ringquerschnitt als im Pumpengehäuse 12 und gegenüber dem Kolben 18 axial verschieblichen Körper auf. Der Ringkörper 92 besteht aus einem formstabilen, leicht gleitenden und gut führenden Kunststoff, beispielsweise aus dem selben Material wie der Führungsring 24 der in Figur 1 dargestellten Kolbenpumpe 10. Der Ringkörper 92 ist auf den Kolben 18 axial verschieblich aufgeschoben, er liegt in einem ringförmigen Zwischenraum zwischen dem Kolben 18 und der Laufbuchse 16 ein. Der Ringkörper 92 befindet sich in axialer Richtung betrachtet, zwischen der Schraubendruckfeder 34 und dem Radialflansch 28 des Ventilkäfigs 30, der Ringkörper 92 wird von der unter Vorspannung stehenden Schraubendruckfeder 34 - wie der Führungsring 24 und der Dichtring 26 der in Figur 1 dargestellten Kolbenpumpe - gegen den Radialflansch 28 gedrückt und wird bei einer ausreichenden Druckdifferenz zwischen dem Verdrängungsraum und einer Einlaßseite der Kolbenpumpe gegen die Kraft der Schraubendruckfeder 34 vom Radialflansch 28 abgehoben.

in zwei umlaufenden Nuten des Ringkörpers 92, die der S-förmige Ringquerschnitt des Ringkörpers 92 bildet, von denen die eine nach außen und die andere nach innen offen ist, liegen zwei Dichtringe 94, 96 ein, deren einer Dichtring 94 zwischen dem Ringkörper 92 und der Laufbuchse 16 und deren anderer Dichtring 96 zwischen dem Ringkörper 92 und dem Kolben 18 abdichtet. Die Verwendung des formstabilen Ringkörpers 92 hat den Vorteil, daß der Ringkörper 92 die von der Schraubendruckfeder 34 ausgeübte Axialkraft aufnimmt, die im Ringkörper 92 einliegenden Dichtringe 94, 96 werden nicht von der Kraft der Schraubendruckfeder 34 beaufschlagt. Dies verbessert Dauerhaltbarkeit der Dichtringe 94, 96, vermindert deren Reibung und verbessert deren Dichtwirkung. Der formstabile Ringkörper 92 bewirkt optimale Einbaubedingungen für die Dichtringe 94, 96. Der Ringkörper 92 führt den Kolben 18 axial in der Laufbuchse 16, so daß kein separater Führungsring erforderlich ist. Zusammen mit den Dichtringen 94, 96 dichtet der Ringkörper 92 zwischen dem Kolben 18 und der Laufbuchse 16 ab, so daß der Dichtring 26 der in Figur 1 dargestellten Kolbenpumpe 10 entfällt. Ebenso erübrigt sich der Stützring 40 der in Figur 1 dargestellten Kolbenpumpe.

Im übrigen stimmt die Einzelheit in Figur 3 dargestellte, erfindungsgemäße Abwandlung der in Figur 1 dargestellten Kolbenpumpe 10 mit der Kolbenpumpe 10 überein und funktioniert in gleicher Weise. Für übereinstimmende Bauteile werden gleiche Bezugszahlen verwendet. Zur Vermeidung von Wiederholungen wird insoweit auf die vorstehenden Ausführungen zu Figuren 1 und 2 verwiesen.

## Patentansprüche

1. Kolbenpumpe, insbesondere für eine Fahrzeugbremsanlage, mit einem zu einer hin- und hergehenden Hubbewegung antreibbaren Kolben (18), der in einer Bohrung (14) in einem Pumpengehäuse (12) axial verschieblich aufgenommen ist, mit einem Fluideinlaß (52) und mit einem Verdrängungsraum (42), sowie mit einem im Pumpengehäuse (12) axial verschieblich aufgenommenen Körper (24, 26, 40; 92, 94, 96), der eine dem Verdrängungsraum (42) zugewandte Stirnseite und eine dem Verdrängungsraum (42) abgewandte Stirnseite hat, wobei der Körper (24, 26, 40; 92, 94, 96) gegen eine Kraft eines Federelements (34) gegenüber dem Kolben (18) axial verschieblich ist und der eine Querschnittsfläche des Kolbens (18) vergrößert, **dadurch gekennzeichnet, daß** der Fluideinlaß (52) auf der dem Verdrängungsraum (42) abgewandten Stirnseite des Körper (24, 26, 40; 92, 94, 96) in die Bohrung (14) mündet und ein von der dem Verdrängungsraum (42) abgewandten Stirnseite des Körper (24, 26, 40; 92, 94, 96) zu der dem Verdrängungsraum (42) zugewandten Stirnseite des Körper (24, 26, 40; 92, 94, 96) führender Fluiddurchlaß (48, 50) vorgesehen ist.

2. Kolbenpumpe nach Anspruch 1, **dadurch gekennzeichnet, daß** in dem von der abgewandten Stirnseite zu der zugewandten Stirnseite führenden Fluiddurchlaß (48, 50) ein Rückschlagventil (56) vorgesehen ist.

3. Kolbenpumpe nach Anspruch 2, **dadurch gekennzeichnet, daß** das Rückschlagventil (56) in dem Fluiddurchlaß (48, 50) nur eine Fluidströmung von der dem Verdrängungsraum (42) abgewandten Stirnseite des Körper (24, 26, 40; 92, 94, 96) zu der dem Verdrängungsraum (42) zugewandten Stirnseite des Körper (24, 26, 40; 92, 94, 96) erlaubt.

4. Kolbenpumpe nach einem der vorhergehenden Ansprüche, **dadurch gekennzeichnet, daß** sich das Federelement (34) am Kolben (18) abstützt.

5. Kolbenpumpe nach einem der vorhergehenden Ansprüche, **dadurch gekennzeichnet, daß** der Körper ein auf den Kolben (18) aufgeschobener Ringkörper (24, 26, 40; 92, 94, 96) ist.

6. Kolbenpumpe nach Anspruch 5, **dadurch gekennzeichnet, daß** der Ringkörper einen Dichtring (26, 94, 96) aufweist.

7. Kolbenpumpe nach Anspruch 5 oder 6, **dadurch gekennzeichnet, daß** der Ringkörper einen Führungsring (24, 92) aufweist.

8. Kolbenpumpe nach einem der vorhergehenden Ansprüche, **dadurch gekennzeichnet, daß** das Federelement 34, gegen dessen Kraft der Körper (24, 26, 40; 92, 94, 96) gegenüber dem Kolben (18) axial verschieblich ist, eine Vorspannung aufweist.

9. Kolbenpumpe nach einem der vorhergehenden Ansprüche, **dadurch gekennzeichnet, daß** die Kolbenpumpe (10) einen mit dem Pumpengehäuse (12) ortsfesten Axialanschlag (32) für den Körper (24, 26, 40; 92, 94, 96) aufweist, wobei der Axialanschlag (32) eine Axialbewegung des Körpers (24, 26, 40; 92, 94, 96) gegenüber dem Pumpengehäuse (12) in einer das den Körper (24, 26, 40; 92, 94, 96) beaufschlagenden Federelement (34) spannenden Richtung begrenzt.

10. Kolbenpumpe nach einem der vorhergehenden Ansprüche, **dadurch gekennzeichnet, daß** der Kolben (18) einen Axialanschlag (28) aufweist, der einen axialen Verschiebeweg des Körpers (24, 26, 40; 92, 94, 96) gegenüber dem Kolben (18) in einer das den Körper (24, 26, 40; 92, 94, 96) beaufschlagenden Federelement (34) entlastenden Richtung begrenzt.

## Claims

1. Piston pump, in particular for a vehicle brake system, with a piston (18) which is capable of being driven in a to-and-fro stroke movement and which is received axially displaceably in a bore (14) in a pump casing (12), with a fluid inlet (52) and with a displacement space (42), and also with a body (24, 26, 40; 92, 94, 96) which is received axially displaceably in the pump casing (12) and which has one end face facing the displacement space (42) and one end face facing away from the displacement space (42), the body (24, 26, 40; 92, 94, 96) being axially displaceable with respect to the piston (18) counter to a force of a spring element (34), and which enlarges a cross-sectional surface of the piston (18), **characterized in that** the fluid inlet (52) issues into the bore (14) on that end face of the body (24, 26, 40; 92, 94, 96) which faces away from the displacement space (42), and a fluid passage (48, 50) leading from that end face of the body (24, 26, 40; 92, 94, 96) which faces away from the displacement space (42) to that end face of the body (24, 26, 40; 92, 94, 96) which faces the displacement space (42) is provided.

2. Piston pump according to Claim 1, **characterized in that** a non-return valve (56) is provided in the fluid passage (48, 50) leading from the facing-away end face to the facing end face.

3. Piston pump according to Claim 2, **characterized in that** the non-return valve (56) in the fluid passage (48, 50) allows only a fluid flow from the end face of the body (24, 26, 40; 92, 94, 96) which faces away from the displacement space (42) to that end face of the body (24, 26, 40; 92, 94, 96) which faces the displacement space (42).

4. Piston pump according to one of the preceding claims, **characterized in that** the spring element (34) is supported on the piston (18).

5. Piston pump according to one of the preceding claims, **characterized in that** the body is an annular body (24, 26, 40; 92, 94, 96) pushed onto the piston (18).

6. Piston pump according to Claim 5, **characterized in that** the annular body has a sealing ring (26, 94, 96).

7. Piston pump according to Claim 5 or 6, **characterized in that** the annular body has a guide ring (24, 92).

8. Piston pump according to one of the preceding claims, **characterized in that** the spring element (34), counter to the force of which the body (24, 26, 40; 92, 94, 96) is axially displaceable with respect to the piston (18), has a prestress

9. Piston pump according to one of the preceding claims, **characterized in that** the piston pump (10) has, for the body (24, 26, 40; 92, 94, 96), an axial stop (32) having a fixed location with respect to the pump casing (12), the axial stop (32) limiting an axial movement of the body (24, 26, 40; 92, 94, 96) with respect to the pump casing (12) in a direction tensioning the spring element (34) acting upon the body (24, 26, 40; 92, 94, 96).

10. Piston pump according to one of the preceding claims, **characterized in that** the piston (18) has an axial stop (28) which limits an axial displacement travel of the body (24, 26, 40; 92, 94, 96) with respect to the piston (18) in a direction relieving the spring element (34) acting upon the body (24, 26, 40; 92, 94, 96).

## Revendications

1. Pompe à piston notamment pour une installation de frein de véhicule comprenant un piston (18) entraîné suivant un mouvement alternatif de va et vient en coulissement axial, dans un perçage (14) du boîtier de pompe (12), une entrée de fluide (52) et une chambre de refoulement (42) ainsi qu'un corps (24, 26, 40 ; 92, 94, 96), coulissant axialement dans le boîtier de pompe (12), ce corps ayant une face frontale tournée vers la chambre de refoulement (42) et une face frontale opposée à la chambre de refoulement (42), le corps (24, 26, 40 ; 92, 94, 96), étant coulissant par rapport au piston (18), axialement contre la force développée par un élément de ressort (34), en augmentant la surface de la section du piston (18),
**caractérisée en ce que**
l'entrée de liquide (52) débouche dans le perçage (14) sur la face frontale du corps (24, 26, 40 ; 92, 94, 96), à l'opposé de la chambre de refoulement (42), et il est prévu un passage de liquide (48, 50) allant de la face frontale du corps (24, 26, 40 ; 92, 94, 96), à l'opposé de la chambre de refoulement (42) conduisant vers la face frontale du corps (24, 26, 40 ; 92, 94, 96), tournée vers la chambre de refoulement (42).

2. Pompe à piston selon la revendication 1,
**caractérisée par**
un clapet antiretour (56) prévu dans le passage de liquide (48, 50) conduisant, de la face frontale opposée à la face frontale correspondante.

3. Pompe à piston selon la revendication 2,
**caractérisée en ce que**
le clapet antiretour (56) du passage de liquide (48, 50) ne permet un sens d'écoulement allant seulement de la face du corps (24, 26, 40 ; 92, 94, 96), opposée à la chambre de refoulement (42) vers la face du corps (24, 26, 40 ; 92, 94, 96), tournée vers la chambre de refoulement (42).

4. Pompe à piston selon l'une quelconque des revendications précédentes,
**caractérisée en ce que**
l'élément de ressort (34) s'appuie contre le piston (18).

5. Pompe à piston selon l'une quelconque des revendications précédentes,
**caractérisée en ce que**
le corps est un corps annulaire (24, 26, 40 ; 92, 94, 96), engagé sur le piston (18).

6. Pompe à piston selon la revendication 5,
**caractérisée en ce que**
le corps annulaire comporte un joint d'étanchéité (26, 94, 96).

7. Pompe à piston selon l'une quelconque des revendications 5 ou 6,
**caractérisée en ce que**
le corps annulaire comporte un anneau de guidage (24, 92).

8. Pompe à piston selon l'une quelconque des revendications précédentes,
**caractérisée en ce que**
l'élément de ressort (34) contre la force duquel le corps (24, 26, 40 ; 92, 94, 96) peut coulisser axialement par rapport au piston (18) présente une précontrainte.

9. Pompe à piston selon l'une quelconque des revendications précédentes,
**caractérisée en ce que**
la pompe à piston (10) comporte une butée axiale (32) fixe par rapport au boîtier (12) de la pompe par rapport au corps (24, 26, 40 ; 92, 94, 96), la butée axiale (32) limitant le mouvement axial du corps (24, 26, 40 ; 92, 94, 96) par rapport au boîtier de pompe (12) dans le sens sollicitant l'élément de ressort (34) pour le serrage du corps (24, 26, 40 ; 92, 94, 96).

10. Pompe à piston selon l'une quelconque des revendications précédentes,
**caractérisée en ce que**
le piston (18) comporte une butée (28) qui limite le coulissement axial du corps (24, 26, 40 ; 92, 94, 96) par rapport au piston (18), dans le sens de la décharge de l'élément de ressort (34) qui sollicite le corps (24, 26, 40 ; 92, 94, 96).
